# DEMANDE DE BREVET EUROPEEN

(11) **EP 1 517 515 A2**
(43) Date de publication de la demande: **23.03.2005**
(21) Numéro de dépôt: 04292050.4
(22) Date de dépôt: 13.08.2004
(51) Int. Cl.: H04L 29/06

(54) **Procédé et dispositif de transmission de paquets avex multiplexage**

(30) Priorité: 20.08.2003 FR 0310050
(71) Demandeur: FRANCE TELECOM, 75015 Paris (FR)
(72) Inventeur: Bernhard, Raphael, 06110 Le Cannet (FR); Besson, Emmanuel, 06250 Mougins le Haut (FR)
(74) Mandataire: Loisel, Bertrand

(57) **Abrégé**

Un procédé de transmission de paquets, dans lequel des premiers paquets sont émis par des stations sources (5,6,7) à destination de stations cibles (8,9), les stations sources et cibles étant reliées par un réseau de données (1) en mode paquet, dans lequel on agrège des premiers paquets (P1,P2,P3) choisis en fonction d'au moins la taille et la station cible de chaque premier paquet parmi un ensemble de premiers paquets émis par des stations sources, pour constituer des seconds paquets (Pu) respectifs de même niveau protocolaire que les premiers paquets ; une fois qu'un second paquet vérifie un critère d'émission déterminé, on émet le second paquet à destination d'une adresse déterminée en fonction des stations cibles destinataires des premiers paquets agrégés dans ledit second paquet.

## Description

La présente invention concerne le domaine des transmissions en mode paquet dans les réseaux de données.

Le réseau de données est par exemple un réseau IP (Internet Protocol).

Dans certains cas, un tel réseau de données est amené à transporter par rafale un grand nombre de petits paquets. Un tel cas se présente par exemple lors de la mise en oeuvre du protocole ICA (« Independent Computing Architecture »). Ce protocole, mis au point par la société Citrix (http://www.citrix.com), permet de déporter à travers le réseau, l'affichage d'applications s'exécutant sur un serveur. Ce protocole, qui s'appuie sur les infrastructures réseau standards telles que TCP/IP (Transmission Control Protocol/Internet Protocol), a le défaut de générer des rafales composées d'un grand nombre de petits paquets. Par exemple, chaque déplacement de souris sur la station sur laquelle est déporté l'affichage génère un très petit paquet qui est envoyé au serveur.

Dans le cadre de réseaux à faible débit ou ne proposant pas de qualité de service élevée, les quantités importantes de petits paquets ainsi générées peuvent provoquer des engorgements à plusieurs niveaux. Tout d'abord un engorgement peut avoir lieu au niveau du réseau. En effet, un grand nombre de paquets contenant très peu d'information utile doit être véhiculé dans le réseau, ce qui provoque une augmentation subite de la bande passante nécessaire.

Un engorgement peut également se produire au niveau des équipements. Tous les paquets émis dans un faible intervalle de temps doivent être traités par les équipements physiques (par exemple routeur), ce qui provoque une augmentation de la charge de ces équipements, voire une saturation.

Face à ce problème, plusieurs techniques ont été proposées. Elles consistent principalement en des principes de lissage de trafic et d'affectation de priorités à des flux. On peut par exemple citer les solutions suivantes : PacketShaper de Packeteer (www.packeteer.com/products/packetshaper.cfm), Ip/boss de Ipanema Technologies ( www.lpanematech.com) ou encore les solutions de Expand Networks (http://www.expand.com).

Le principe de base de toutes ces solutions consiste à mettre sur le réseau local un équipement d'interconnexion qui reçoit tout le trafic (comme un routeur). Lors de l'installation d'un tel équipement, l'utilisateur définit un ensemble de règles qui vont permettre d'associer une priorité à chaque paquet arrivant sur l'équipement. Cette priorité permet de décider du délai d'attente (éventuellement nul) observé par l'équipement pour transférer le paquet vers le réseau destinataire.

Ce type d'équipement affecte des priorités et régule des flux de paquets, mais ne gère pas l'ensemble des problèmes occasionnés sur le réseau par les rafales de petits paquets induites par ce protocole, car tous ces petits paquets continuent à exister et à devoir être gérés sur l'ensemble du réseau.

Une autre solution connue repose sur une fonctionnalité permettant de mettre en file d'attente au niveau du client ICA, les paquets créés suite aux mouvements de la souris de la station.

La présente invention vise à proposer un procédé et des dispositifs permettant de pallier les inconvénients ci-dessus.

Ainsi suivant un premier aspect, l'invention propose un procédé de transmission de paquets, dans lequel des premiers paquets sont émis par des stations sources à destination de stations cibles, les stations sources et cibles étant reliées par un réseau de données en mode paquet, comprenant les étapes suivantes :
- on agrège des premiers paquets choisis en fonction d'au moins la taille et la station cible de chaque premier paquet parmi un ensemble de premiers paquets émis par des stations sources, pour constituer des seconds paquets respectifs de même niveau protocolaire que les premiers paquets ;
- une fois qu'un second paquet vérifie un critère d'émission déterminé, on émet le second paquet à destination d'une adresse déterminée en fonction des stations cibles destinataires des premiers paquets agrégés dans ledit second paquet.

Le procédé selon l'invention permet ainsi de mutualiser un ensemble de paquets en un seul paquet, afin d'augmenter globalement les performances du réseau. Des paquets émis par plusieurs sources géographiquement proches avec des caractéristiques particulières (par exemple paquets de petite taille), peuvent être assemblés et envoyés à travers le réseau sous forme d'un paquet unique contenant l'ensemble des paquets originaux.

Cette technique permet de réduire le nombre de paquets devant être commutés dans le réseau, et donc notamment de diminuer la charge des équipements tels que les routeurs. Il permet en outre de mieux utiliser les ressources du réseau en créant des paquets dont les caractéristiques (par exemple la taille), sont idéales pour le réseau.

L'invention augmente ainsi nettement les performances réseau de systèmes d'information, qui utilisent par exemple le protocole ICA et qui sont déployés sur des grands réseaux (WAN) à faible débit.

Suivant un second aspect, l'invention propose un dispositif d'agrégation de premiers paquets émis par des stations sources à destination de stations cibles, les stations sources et cibles étant reliées par un réseau de données en mode paquet, comprenant des moyens pour mettre en oeuvre les étapes d'un procédé selon le premier aspect de l'invention.

Suivant un troisième aspect, l'invention propose un dispositif de désagrégation de seconds paquets identifié par une adresse déterminée, dans un réseau de données en mode paquet et comportant des stations sources émettant des premiers paquets à destination de stations cibles, lesdits seconds paquets étant obtenus suite à la mise en oeuvre d'un procédé selon le premier aspect de l'invention. Ce dispositif de désagrégation comprend :
- des moyens de réception d'un second paquet ;
- des moyens d'extraction de chaque premier paquet agrégé dans le second paquet reçu ;
- des moyens d'émission de chaque premier paquet extrait à destination d'une station cible respective.

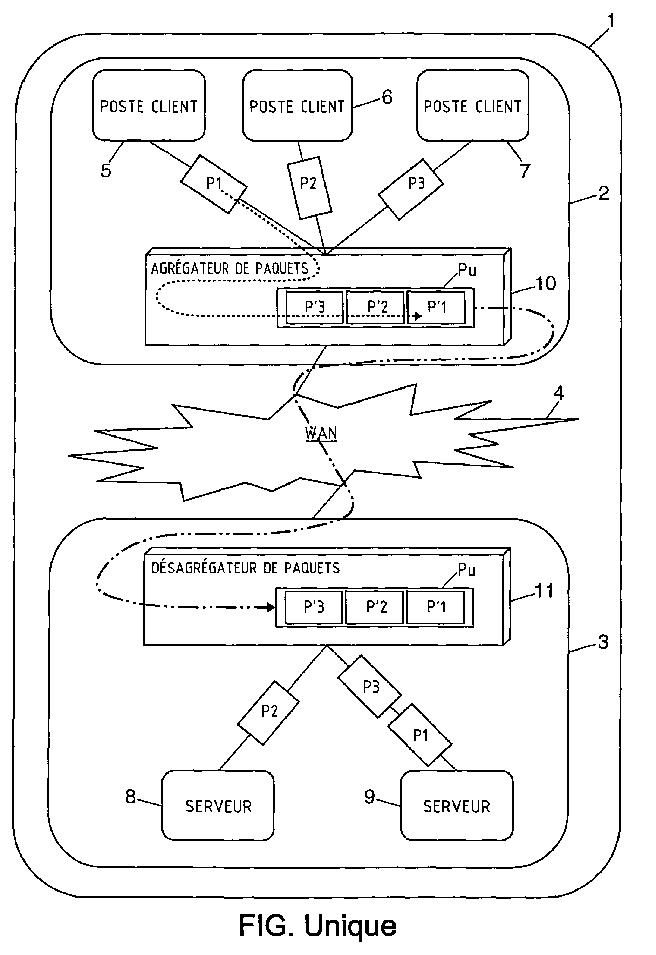

D'autres caractéristiques et avantages de l'invention apparaîtront encore à la lecture de la description qui va suivre. Celle-ci est purement illustrative et doit être lue en regard des dessins annexés sur lesquels :
- la figure unique est un schéma d'un système mettant en oeuvre l'invention.

Sur la figure unique est représenté un réseau de données 1 comprenant un premier réseau local (LAN, "Local Area Network") 2 et un second réseau local 3. Ces deux LAN 2 et 3 sont reliés par un réseau étendu (WAN, "Wide Area Network") 4.

Des stations communiquant entre elles sont réparties dans différents sous-réseaux du réseau 1. Sur la figure unique sont représentées trois stations 5, 6 et 7 dans le LAN 2. Dans le LAN 3 se trouvent notamment deux stations 8 et 9. Dans le mode de réalisation considéré ici, les stations 8 et 9 sont par exemple des serveurs fournissant aux stations clientes 5, 6 et 7 des services provoquant la génération par ces stations clientes d'une multitude de petits paquets P adressés en retour aux serveurs 8, 9. Nous considérerons par la suite à titre d'exemple que les deux serveurs utilisent avec les stations clientes 5, 6, 7 le même protocole ICA précité supporté par le réseau 1.

Un module d'agrégation de paquets 10 fait également partie du LAN 2.

Dans un mode de réalisation de l'invention représenté en figure unique, les stations clientes 5, 6, 7 envoient les paquets ICA qu'elles émettent à destination des serveurs 8 et 9, d'abord au module d'agrégation de paquets 10. Les paquets non ICA sont envoyés de façon traditionnelle. Une fois que ce dernier dispose de suffisamment de petits paquets ou après un certain délai, il envoie ces paquets agrégés sous la forme d'un seul paquet Pu.

Dans un réseau de l'art antérieur, les stations 5, 6, 7 enverraient directement les paquets aux serveurs. De ce fait, pour acheminer des paquets, Pi, _{i=1,...,m}, le réseau devrait commuter ces m paquets.

Sur la figure unique sont représentés trois paquets ICA successivement reçus par le module d'agrégation de paquets 10, en

provenance des stations 5, 6 et 7: le paquet P1 émis par la station 5 à destination du serveur 9, le paquet P2 émis par la station 6 à destination du serveur 8 et le paquet P3 émis par la station 7 à destination du serveur 9.

Au fur et à mesure, le module d'agrégation de paquets 10 agrège ces paquets en vérifiant après chaque nouvelle agrégation un critère d'émission pré-établi. Tant que le critère d'émission n'est pas vérifié, l'agrégation de nouveaux paquets reçus se poursuit. Quand il est vérifié, le paquet ainsi constitué est transmis, l'agrégation de nouveaux paquets ayant lieu dans un nouveau paquet.

Avantageusement, les paquets Pi, _{i=i,2,3,} sont stockés dans le paquet Pu sous une forme réduite Pi'_{,i=1,2,3} car certaines informations communes à P1, P2,P3 peuvent être supprimées et factorisées dans Pu. Par exemple, ces données factorisées dans le cas représenté en figure unique comportent des données relatives à l'identification du LAN 3, auquel chaque paquet P1, P2, P3 est adressé. Dans un autre type de paquet agrégé constitué dont tous les paquets constitutifs auraient le même serveur destinataire, les données relatives à l'adresse du serveur destinataire (adresse IP et port de destination) sont factorisées.

Le fait d'agréger de paquets ayant des caractéristiques communes permet également de mettre en place une fonctionnalité de compression.

De plus, si ces caractéristiques communes restent identiques tout au long de la connexion, celles-ci peuvent être transmise une seule fois à l'initialisation du système puis systématiquement supprimées de l'ensemble de paquets. Par exemple, en agrégeant tous les paquets à destination d'un même port sur une même adresse IP définie à l'initialisation du système, le numéro de ce port et l'adresse IP peuvent être supprimés dans tous les échanges.

Supposons que le paquet Pu résultant de l'agrégation des trois paquets P1,P2,P3 vérifie le critère d'émission (en fonction des paquets à agréger et du critère d'émission, la répartition au sein d'un paquet agrégé pourrait être autre à un autre moment, par exemple quatre paquets issus de la station 5, un paquet de la station 7 et zéro paquet de la station 6).

Le paquet Pu constitué par le module d'agrégation 10 est alors émis à destination d'une adresse correspondant à un module de désagrégation de paquets 11 faisant partie du LAN 3, point de passage commun de chacun des paquets P1, P2, P3 agrégés dans Pu.

A la réception du paquet Pu par le module de désagrégation de paquets 11, ce dernier reconstitue le paquet P1 en réintégrant dans P1 tout ou partie des données factorisées dans Pu. Puis il émet P1 vers sa destination initiale, à savoir le serveur 9.

Le chemin inverse (réponse d'une station serveur à une station client) est obtenu par simple symétrie du procédé décrit ci-dessus.

Dans le mode de réalisation considéré sur la figure unique, on a agrégé tous les paquets ICA émis sur un même réseau local (LAN) et qui sont tous à destination d'un second LAN.

D'autres critères d'agrégation peuvent être choisis. Ainsi on peut également agréger entre eux :
- uniquement des paquets de même type (par exemple ICA), ou au contraire de types différents, avec une condition de taille maximale ou non ;
- des paquets en provenance d'un même LAN et à destination d'un même port d'une même adresse IP, ce qui permet par exemple de gérer le problème de rafales de petits paquets depuis le LAN source ;
- des paquets en provenance d'un même sous-ensemble d'un LAN et à destination d'un même port d'une même adresse IP , ce qui permet, en plus, de gérer les priorités de flux en provenance de différents sous-ensembles de postes clients sur le LAN source.

Plusieurs étages successifs d'agrégation peuvent être effectués à des endroits différents du réseau 1.

Par exemple, des agrégations pourront être effectuées sur des paquets résultant déjà d'une agrégation.

Le critère d'émission peut comporter différents aspects. Il peut par exemple établir une taille minimale (qui peut correspondre à une taille optimale par rapport aux capacités de traitement du réseau, évaluée par l'administrateur du réseau) au-delà de laquelle un paquet Pu peut être émis.

Il peut également prendre en compte le résultat d'une comparaison entre un délai d'attente maximal et un délai d'attente calculé à partir des délais d'attente, depuis leur arrivée au module d'agrégation 10, des paquets P1, P2, P3 du paquet Pu en cours de constitution. Le délai calculé peut être le délai moyen d'attente des paquets agrégés, ou le délai d'attente du paquet Pi arrivé le plus tôt parmi les paquets agrégés dans Pu, etc. Si le délai d'attente calculé est supérieur ou égal au délai maximum d'attente, le paquet est émis.

Le critère peut être une combinaison de différentes conditions. Par exemple, le paquet Pu est émis dès que l'une des conditions est vérifiée (ou dès que toutes les conditions le sont, etc).

Ces critères peuvent être différents en fonction des modules d'agrégation considérés dans le réseau.

De plus, ils peuvent être ajustés dynamiquement en fonction de paramètres relatifs au réseau de données 1. Ces ajustements modifient le comportement des modules d'agrégation et permettent ainsi d'exploiter au mieux les capacités du réseau à un instant donné.

Les paramètres relatifs au réseau permettant de définir les ajustements sont par exemple des informations régulièrement collectées dans le réseau, par exemple relatives au :
- Taux de charge (CPU, mémoire, . .) des différents routeurs traversé par le gros paquet,
- Nombre de clients émettant des petits paquets (cette valeur change à chaque fois qu'un nouvel utilisateur se connecte),
- Taux d'occupation du réseau WAN,
- Type de réseau WAN (chaque type de réseau définit une taille idéale de paquet).

## Revendications

1. Procédé de transmission de paquets, dans lequel des premiers paquets sont émis par des stations sources (5,6,7) à destination de stations cibles (8,9), les stations sources et cibles étant reliées par un réseau de données (1) en mode paquet, comprenant les étapes suivantes :
- on agrège des premiers paquets (P1,P2,P3) choisis en fonction d'au moins la taille et la station cible de chaque premier paquet parmi un ensemble de premiers paquets émis par des stations sources, pour constituer des seconds paquets (Pu) respectifs de même niveau protocolaire que les premiers paquets,
- une fois qu'un second paquet vérifie un critère d'émission déterminé, on émet le second paquet à destination d'une adresse déterminée en fonction des stations cibles destinataires des premiers paquets agrégés dans ledit second paquet.

2. Procédé selon la revendication 1 selon lequel l'agrégation est réalisée en outre en fonction de la station source de chaque premier paquet.

3. Procédé selon la revendication 1 ou la revendication 2 selon lequel on agrège dans un second paquet des premiers paquets, dont les stations sources respectives font partie d'un même réseau local (2) ou d'une même partie de réseau local.

4. Procédé selon l'une quelconque des revendications 1 à 3, selon lequel on agrège dans un second paquet des premiers paquets, dont les stations cibles respectives font partie d'un même réseau local (3).

5. Procédé selon l'une quelconque des revendications 1 à 3, selon lequel on agrège dans un second paquet des premiers paquets ayant une station cible commune.

6. Procédé selon l'une quelconque des revendications 1 à 5, comprenant en outre l'étape suivante, avant l'étape d'émission :
- on supprime d'au moins un premier paquet (P1,P2,P3) agrégé dans un second paquet (Pu) des données qui sont communes à plusieurs paquets agrégés dans le second paquet.

7. Procédé selon la revendication 6, dans lequel on intègre lesdites données communes au second paquet (Pu).

8. Procédé selon l'une quelconque des revendications 1 à 7, selon lequel le critère d'émission d'un second paquet (Pu) comprend au moins une condition de taille comparant la taille d'un second paquet à une taille minimale définie.

9. Procédé selon l'une quelconque des revendications 1 à 8, selon lequel le critère d'émission d'un second paquet (Pu) comprend au moins une condition de délai d'attente comparant un délai d'attente calculé en fonction du délai d'attente avant émission des premiers paquets agrégés dans le second paquet, à un temps maximal défini.

10. Procédé selon l'une quelconque des revendications 1 à 9, selon lequel le critère d'émission d'un second paquet (Pu) est ajusté dynamiquement en fonction au moins de paramètres du réseau de données (1).

11. Procédé selon l'une quelconque des revendications 1 à 10, comprenant en outre l'étape suivante mise en oeuvre à l'adresse déterminée :
- on reçoit un second paquet (Pu) ;
- on extrait chaque premier paquet (P1,P2,P3) agrégé dans le second paquet reçu ;
- on émet chaque premier paquet extrait à destination de sa station cible (8,9).

12. Dispositif d'agrégation (10) de premiers paquets (P1,P2,P3) respectivement émis par des stations sources (5,6,7) à destination de stations cibles (8,9), ces stations sources et cibles étant reliées par un réseau de données (1) en mode paquet, comprenant des moyens pour mettre en oeuvre les étapes d'un procédé selon l'une des revendications 1 à 10.

13. Dispositif de désagrégation (11) de seconds paquets (Pu) ayant une adresse déterminée dans un réseau de données (1) en mode paquet comportant des stations sources (5,6,7) émettant des premiers paquets (P1,P2,P3) à destination de stations cibles (8,9) respectives, lesdits seconds paquets étant obtenus conformément à un procédé selon l'une des revendications 1 à 10, ledit dispositif comprenant :
- des moyens de réception d'un second paquet ;
- des moyens d'extraction de chaque premier paquet agrégé dans le second paquet reçu ;
- des moyens d'émission de chaque premier paquet extrait à destination d'une station cible respective.
